# EUROPÄISCHE PATENTSCHRIFT

(11) **EP 3 069 103 B1**
(45) Veröffentlichungstag und Bekanntmachung des Hinweises auf die Patenterteilung: **10.01.2018**
(21) Anmeldenummer: 14796492.8
(22) Anmeldetag: 10.11.2014
(51) Int. Cl.: G01C 21/34, G01C 21/36

(54) **NAVIGATIONSSYSTEM UND VERFAHREN ZU SEINEM BETRIEB**
NAVIGATION SYSTEM AND METHOD FOR OPERATING IT
SYSTÈME DE NAVIGATION ET SON PROCÉDÉ D'EXPLOITATION

(30) Priorität: 12.11.2013 DE 102013222960
(43) Veröffentlichungstag der Anmeldung: 21.09.2016
(73) Patentinhaber: Continental Automotive GmbH, 30165 Hannover (DE)
(72) Erfinder: RAUCH, Manuel, 94249 Bodenmais (DE); OELMAIER, Gebhard, 84453 Mühldorf (DE); BECK, Urs, 93138 Lappersdorf (DE); STEGE, Kurt, 93107 Thalmassing (DE)
(86) Internationale Anmeldenummer: PCT/EP2014/074193
(87) Internationale Veröffentlichungsnummer: WO 2015/071224

(56) Entgegenhaltungen:
- DE-A1-102011 089 355
- JP-A- H 102 749

## Beschreibung

Die Erfindung liegt auf dem Gebiet der Elektrotechnik und der Steuerungstechnik und befasst sich speziell mit der Planung von Routen in geografischen Systemen von Verkehrsknotenpunkten, die in einer Datenbank repräsentiert sind.

Navigationssysteme zur Berechnung von Routen in geografischen Systemen sind nicht nur aus der Automobiltechnik, sondern allgemein auch aus der Logistik bekannt und werden inzwischen sowohl für die Fußgänger- als auch die Fahrradnavigation und für die Navigation von speziellen Fahrzeugen angeboten.

Eine besondere Rolle bei der Routenplanung spielen dabei neben dem Anfangs- und Endpunkt der Route und zwischen diesen liegenden Wegstücken und Verkehrsknoten auch zusätzlich anfahrbare Sonderziele, wie beispielsweise Tankstellen, Reparaturwerkstätten, Restaurants oder andere, möglicherweise anwenderdefinierte Orte, die in eine Routenplanung mit einbezogen werden können.

Üblicherweise werden bei einer Routenberechnung bestimmte Anschlussknoten, wie beispielsweise Autobahnausfahrten, daraufhin überprüft, ob in ihrem geografischen Umfeld, typischerweise definiert durch eine geometrische (Luftlinien-)Entfernung, bestimmte Sonderziele zur Verfügung stehen. Bei dieser Auswahl wird zunächst nicht berücksichtigt, ob die entsprechenden Sonderziele auch mittels zur Verfügung stehender Wegstücke von dem jeweiligen Anschlussknoten aus erreichbar sind.

Zudem ist es insbesondere für Fahrzeuge mit besonderen Nutzungsbeschränkungen wichtig, zu erfahren, ob entsprechende Wege zwischen Anschlussknoten und Sonderzielen auch jeweils mit dem aktuellen Fahrzeug befahrbar sind.

Aus der DE 10 2011 089355 A1 ist ein Navigationssystem zur Ermittlung von Ortsinformationsobjekten (auch als "Points of Interest" (POI) bezeichnet) mit einer elektronischen Stra-ßenkarte und einer Routenberechnungseinheit bekannt, wobei in der elektronischen Straßenkarte ein POI jeweils mit einer oder mehreren Autobahnabfahrten verknüpft ist und zu einem POI bezüglich jeder Autobahnabfahrt, mit der er verknüpft ist, eine Entfernung abgespeichert ist. Die Entfernung basiert entweder auf der Luftlinie oder auf der schnellsten oder kürzesten Straßenroute.

Vor diesem Hintergrund stellt sich die Aufgabe, ein Navigationssystem und ein Verfahren zu seinem Betrieb zu schaffen, die die Einbindung bestimmter Sonderziele und/oder Kategorien von Sonderzielen in einer Routenplanung unter Berücksichtigung von Nutzungsbeschränkungen des Wegenetzes in möglichst effizienter Weise erlauben.

Die Aufgabe wird gemäß der Erfindung mit den Merkmalen des Patentanspruchs 1 bezüglich eines Navigationssystems gelöst. Vorteilhafte Ausgestaltungen der Erfindung sind den Ansprüchen 2 bis 7 zu entnehmen. Der Patentanspruch 8 stellt ein erfindungsgemäßes Verfahren zum Betrieb eines Navigationssystems dar, wobei hierzu vorteilhafte Ausgestaltungen in den Unteransprüchen 9 bis 14 skizziert sind.

Die Erfindung bezieht sich konkret auf ein Navigationssystem zur Ermittlung von qualifizierten Sonderzielen mit einer Datenbank, in der Verkehrsknoten sowie diese verbindende Wegstücke und deren Eigenschaften gespeichert sind, mit einer Routenberechnungseinrichtung, wobei in der Datenbank abgespeicherte Sonderziele mit jeweils einem oder mehreren Verkehrsknoten in Form von Anschlussknoten, insbesondere Autobahnabfahrten, verknüpft sind und wobei jedem Sonderziel bezüglich jedes mit diesem verknüpften Anschlussknotens wenigstens eine Gesamtlänge eines ersten, das Sonderziel und den Anschlussknoten verbindenden Gesamtweges, sowie insbesondere auch der Verlauf des ersten Gesamtweges zugeordnet ist.

Zur Lösung der Aufgabe ist vorgesehen, dass wenigstens in dem Fall, dass der erste Gesamtweg eine Nutzungsbeschränkung aufweist, dem Sonderziel und dem Anschlussknoten noch wenigstens die Gesamtweglänge eines zweiten, insbesondere noch weiterer Gesamtwege zugeordnet sind, die wenigstens bezüglich eines Beschränkungsparameters geringere Nutzungsbeschränkungen aufweisen als der erste Gesamtweg. Es können zudem auch der zweite Gesamtweg und gegebenenfalls weitere Gesamtwege bezüglich ihres Verlaufs zugeordnet und gespeichert sein.

Das erfindungsgemäße System basiert vorteilhaft auf einer Datenbank, in der jedem Sonderziel diejenigen Anschlussknoten zugeordnet sind, von denen das jeweilige Sonderziel über zur Verfügung stehende Wegstücke erreichbar ist. Dabei können diejenigen Anschlussstellen weggelassen werden, von denen aus das Sonderziel zu weit entfernt ist, d. h., dass der verbindende Gesamtweg eine bestimmte Länge in Luftlinienentfernung, oder gemessen in Straßenkilometern oder der benötigten Fahrzeit oder einem benötigten Kraftstoffaufwand, überschreitet.

Damit wird eine Vorauswahl von Verknüpfungen zwischen Sonderzielen und Anschlussknoten getroffen. Es ist jedoch andererseits sichergestellt, dass die jeweils miteinander verknüpften Anschlussknoten und Sonderziele durch existierende Wegstücke verbunden sind und dass der sie verbindende Weg mit einem definierbaren Maximalaufwand zurücklegbar ist.

Dies bedeutet, dass bei der Suche von Sonderzielen entlang einer vorausberechneten Route oder von einem Anschlussknoten aus zunächst nur solche Sonderziele in Betracht gezogen werden, die bezüglich der entsprechend definierten Entfernung gut/schnell von den Anschlussknoten erreichbar sind. Zu jedem entsprechenden Sonderziel liegt in der Datenbank üblicherweise wenigstens ein möglicher Gesamtweg vor, der das Sonderziel mit einem Anschlussknoten verbindet. Im Normalfall liegen zu einem Sonderziel auch mehrere alternative Gesamtwege vor, die dieses mit einem bestimmten Anschlussknoten verbinden.

Bei einer Routenplanung sieht die Erfindung vor, dass nach Eingabe bestimmter Sonderziele oder Kategorien von Sonderzielen außer dem nach der jeweils vorgegebenen Metrik kürzesten Gesamtweg noch alternative Gesamtwege mit geringeren Nutzungsbeschränkungen zur Verfügung gestellt werden, falls solche alternativen Gesamtwege existieren und wenigstens für den Fall, dass der kürzeste Gesamtweg Nutzungsbeschränkungen aufweist. Üblicherweise werden die entsprechenden Alternativwege/Gesamtwege oder zumindest ihre jeweiligen Gesamtweglängen aufgelistet und mittels einer Anwenderschnittstelle dem Anwender/Fahrer angezeigt. Falls der in der gegebenen Metrik kürzeste Gesamtweg zwischen dem Anschlussknoten und dem Sonderziel keine Nutzungsbeschränkungen enthält, so wird dieser dem Sonderziel unmittelbar zugewiesen oder beispielsweise nur dieser Gesamtweg über die Anwenderschnittstelle angezeigt. Es können jedoch auch in diesem Fall noch zusätzliche, längere Gesamtwege angezeigt werden und zugeordnet sein. Enthält der kürzeste Gesamtweg Nutzungsbeschränkungen, so sind dem verknüpften Paar eines Sonderziels und eines Anschlussknotens in der Datenbank weitere Gesamtwege zugewiesen, die geringere Nutzungsbeschränkungen aufweisen. Unter der Nutzungsbeschränkung eines Gesamtweges wird dabei jeweils bezüglich eines Beschränkungsparameters die stärkste Restriktion verstanden, die auf einem Wegstück des Gesamtweges existiert. Ist beispielsweise auf einem Wegstück eines Gesamtweges eine Höhenbeschränkung für das Fahrzeug von 3,5 Metern angegeben und auf einem anderen Wegstück desselben Gesamtweges eine Beschränkung von 3,2 Metern, so ist der Gesamtweg mit einer Höhenbeschränkung von 3,2 Metern versehen.

Bei der Bearbeitung der Datenbank wird beispielsweise nach der Ermittlung des ersten Gesamtweges mit Nutzungsbeschränkungen zum Auffinden eines Gesamtweges mit geringeren Nutzungsbeschränkungen das entsprechende Wegstück mit der stärksten/restriktivsten Beschränkung bezüglich eines Beschränkungsparameters ausgewählt und eliminiert, und es werden neue Gesamtwege zwischen dem Sonderziel und dem Anschlussknoten gesucht, die das eliminierte Wegstück umgehen. Solche weiteren Gesamtwege sind üblicherweise länger in der gegebenen Entfernungsmetrik, weisen jedoch geringere Nutzungsbeschränkungen auf. Sukzessive werden auf diese Weise durch Weglassen bestimmter Wegstücke, die Nutzungsbeschränkungen aufweisen, immer längere Gesamtwege mit immer geringeren Nutzungsbeschränkungen ermittelt. Dieses Verfahren wird entweder bei Erreichen einer bestimmten Gesamtzahl von Gesamtwegen zwischen einem Sonderziel und einem Anschlussknoten abgebrochen oder bei Erreichen einer bestimmten Maximallänge des ermittelten Gesamtweges. Es sind auch andere Abbruchkriterien denkbar. Auf diese Weise sind in der Datenbank jedem Paar eines Sonderziels und eines Anschlussknotens ein oder mehrere Gesamtwege zugeordnet. Diese können beispielsweise nach der Länge des Gesamtweges, beginnend mit dem kürzesten Gesamtweg, geordnet sein oder gemäß bestimmten Restriktionen, die beispielsweise auch vorwählbar sind. Beispielsweise kann es sinnvoll sein, wenn das Navigationssystem auf Lastkraftwagen spezialisiert ist, die Gesamtwege jeweils nach der Restriktion des Beschränkungsparameters "zulässiges Gesamtgewicht" zu ordnen. Damit kann ein Nutzer später während der Systemlaufzeit in einfacher Weise entsprechend der angebotenen Reihenfolge der Gesamtwege so lange weitere Gesamtwege auswählen, bis die Beschränkung des zulässigen Gesamtgewichts auf dem angebotenen Gesamtweg seinen aktuellen Fahrzeugparametern entspricht.

Die Vorauswahl des Beschränkungsparameters zur Ordnung der angebotenen Gesamtwege jeweils zwischen einem Sonderziel und einem Anschlussknoten kann in der Datenbank vorbestimmt oder auch während der Systemlaufzeit durch den Anwender selektiert werden.

Als Restriktionen/Beschränkungsparameter, die für die Berechnung von Gesamtwegen und insbesondere auch für die Ordnung der angebotenen Gesamtwege in einer Liste berücksichtigt werden können, kommen folgende Parameter in Frage: Fahrzeughöhe, Fahrzeugbreite, tatsächliches oder zulässiges Gesamtgewicht des Fahrzeugs, Fahrzeuglänge, tatsächliches oder zulässiges Gesamtgewicht auf einer Achse des Fahrzeugs, Fahrzeugbauart (beispielsweise Motorrad, Fahrrad, Lkw mit Anhänger, Lkw ohne Anhänger, Tieflader, Containertransporter), Mindestgeschwindigkeit (die durch das betrachtete Fahrzeug erreichbar sein muss). Zudem sind verschiedenste Kombinationen aus zwei oder mehr der genannten Beschränkungsparameter denkbar sowie zusätzlich noch Beschränkungen, die die Ladung oder die zulässige Ladung betreffen, wie beispielsweise das Zuladungsgewicht (tatsächliches oder zulässiges), die Art der transportierten Güter (Gefahrgüter, explosive Güter, brennbare Güter, chemisch gefährliche Güter) oder weitere Parameter, die mit dem Transport zusammenhängen (Transport nur im Konvoi oder Ähnliches). Diese insbesondere die Ladung oder weitere Parameter betreffenden Beschränkungen können zusätzlich mit den oben genannten, das Fahrzeug im engeren Sinne betreffenden Beschränkungen kombiniert werden und jeweils bei der Abstufung/Anordnung der Gesamtwege bezüglich der Nutzungsbeschränkungen berücksichtigt werden.

Vom Fahrer kann dann beispielsweise ausgewählt werden, dass die Gesamtwege zunächst nach den Beschränkungen der Fahrzeughöhe und bei gleicher zulässiger Fahrzeughöhe nach den Gewichtsbeschränkungen für das Fahrzeug geordnet werden. Es ist aber auch eine Anordnung gemäß der Fahrzeuglänge und -breite sowie beliebige anderen Kombinationen denkbar.

Durch die erfindungsgemäß vorbereitete Datenbank kann dem Fahrer mit geringem Hardwareaufwand auch für ein Sonderfahrzeug für vorselektierte Sonderziele in sehr kurzer Zeit eine Auswahl von Gesamtwegen zur Verfügung gestellt werden, auf denen von gegebenen Anschlussknoten diese Sonderziele erreichbar sind. Beispielsweise bei der Auswahl einer Kategorie von Sonderzielen kann dem Fahrer eine Auswahl gleichartiger Sonderziele, beispielsweise Tankstellen, bereitgestellt werden, die von verschiedenen Anschlussknoten aus erreichbar sind, so dass er je nach Attraktivität der Gesamtwege selektieren kann, von welchem Anschlussknoten aus er ein entsprechendes Sonderziel anfahren möchte.

Eine vorteilhafte Ausgestaltung der Erfindung sieht vor, dass die einem Sonderziel zugeordneten Anschlussknoten einem ersten Auswahlkriterium genügen. Beispielsweise können die Anschlussknoten, die für die Suche entsprechender Sonderziele ausgewählt werden, danach selektiert werden, ob von ihnen aus entsprechende Sonderziele in einer vorgegebenen Maximalentfernung nach einer vorgegebenen Metrik zur Verfügung stehen. Die Metrik kann dabei beispielsweise die Entfernungsstraßenkilometer, die benötigte Fahrzeit oder den Kraftstoffaufwand oder eine Kombination dieser Parameter einzeln oder verknüpft berücksichtigen. Beispielsweise kann dabei auch die maximale Steigung entsprechender Wegstücke oder der insgesamt zurückzulegende Höhenunterschied berücksichtigt werden.

Eine weitere vorteilhafte Ausgestaltung der Erfindung sieht vor, dass die Zahl der einem Sonderziel und einem Anschlussknoten zugeordneten Gesamtwege durch eine Obergrenze der zugelassenen Gesamtweglänge und/oder durch eine Obergrenze der Zahl der Gesamtwege begrenzt ist.

Das erfindungsgemäße Navigationssystem kann zudem vorteilhaft dadurch ausgestaltet sein, dass eine Nutzungsbeschränkung zulässige Grenzwerte bezüglich eines oder mehrerer Beschränkungsparameter enthält, wobei der Grenzwert bezüglich eines Beschränkungsparameters durch den jeweils restriktivsten Grenzwert der Wegstücke des jeweiligen Gesamtweges gegeben sind. Dabei kann bei der Inbetriebnahme des Navigationssystems vorauswählbar sein, welche Beschränkungsparameter berücksichtigt werden. Dies kann beispielsweise bei einer Anfangsparametrisierung des Navigationssystems für ein gegebenes Fahrzeug geschehen. Handelt es sich dabei beispielsweise um ein Fahrzeug mit Normalbreite, jedoch sehr hohem Aufbau, so kann voreingestellt werden, dass nur Nutzungsbeschränkungen bezüglich der Fahrzeughöhe bei der Auswahl der anfänglich bereitgestellten Gesamtwege und bei der Reihenfolge der dargestellten Gesamtwege jeweils zu einem Sonderziel und einem Anschlussknoten berücksichtigt werden.

Eine weitere vorteilhafte Ausgestaltung der Erfindung sieht vor, dass insbesondere eine Mehrzahl von mit jeweils wenigstens einem Sonderziel verknüpften Anschlussknoten vorgesehen ist, wobei mindestens einem Sonderziel und einem mit diesem verknüpften Anschlussknoten, insbesondere einer Mehrzahl von aus je einem Sonderziel und einem mit diesem verknüpften Anschlussknoten bestehenden Ortspaaren je eine Mehrzahl von diese verbindenden Gesamtwegen mit unterschiedlichen Nutzungsbeschränkungen und Gesamtweglängen zugeordnet ist und dass zu jedem Ortspaar die Gesamtwege entsprechend ihrer Gesamtweglänge geordnet sind.

Als für die oben beschriebene Ordnung der Gesamtwege zugrunde zu legende maßgebende Metrik kommen, wie weiter oben schon ausgeführt, beispielsweise Weglängen, gemessen in Straßenkilometern, erforderlicher Fahrzeit oder Kraftstoffaufwand in Betracht.

Die Erfindung kann zudem vorteilhaft dadurch ausgestaltet werden, dass ein Beschränkungsparameter die Fahrzeughöhe und/oder die Fahrzeugbreite und/oder das Fahrzeuggesamtgewicht und/oder das zulässige Gesamtgewicht des Fahrzeugs und/oder die Fahrzeuglänge und/oder die Fahrzeugbauart und/oder die zulässige Achsbelastung pro Achse und/oder die Mindestgeschwindigkeit und/oder das Nutzungsverbot für gefährliche geladene Güter ist.

Die Erfindung bezieht sich zudem auf ein Verfahren zum Betrieb eines Navigationssystems der oben erläuterten Art, insbesondere im Hinblick auf ein vorgegebenes Fahrzeug, wobei vorgesehen ist, dass ein oder mehrere Anschlussknoten, insbesondere als Stationen einer festgelegten Route, ausgewählt werden, dass zu jedem Anschlussknoten die Sonderziele ausgewählt werden, die mit diesem mittels einer Zuordnung in der Datenbank verknüpft sind, dass dem Anschlussknoten zu jedem mit diesem verknüpften Sonderziel wenigstens ein Gesamtweg zugeordnet wird, sofern nur ein Gesamtweg zwischen dem Anschlussknoten und dem Sonderziel in der Datenbank hinterlegt ist, und dass, falls die Datenbank mehrere Gesamtwege als Verbindungen zwischen dem Anschlussknoten und dem Sonderziel mit unterschiedlichen Nutzungsbeschränkungen aufweist, unter Berücksichtigung der Beschränkungsparameterwerte des aktuellen Fahrzeugs derjenige Gesamtweg ermittelt und dem Anschlussknoten zugeordnet wird, der eine Durchfahrt des Fahrzeugs unter Berücksichtigung der vorliegenden Nutzungsbeschränkungen erlaubt und dabei die kleinste Gesamtweglänge aufweist.

Die Werte des aktuellen Fahrzeugs bezüglich der in Frage kommenden Beschränkungsparameter sind größtenteils bekannt und können vorteilhaft bei einer Anfangsparametrisierung des Navigationssystems eingegeben werden; sie können jedoch auch bei der Planung einer konkreten Route abgefragt werden. Zudem können weitere Beschränkungsparameter, die beispielsweise die Ladung oder variable Zustände des Fahrzeugs (beispielsweise, ob ein Anhänger angekoppelt ist) betreffen, bei der konkreten Routenplanung angegeben werden.

Beschränkungsparameter, die hinsichtlich des tatsächlichen Fahrzeugs, bei dem das Navigationssystem zum Einsatz kommt, unveränderlich sind, können nach einer Anfangsparametrisierung so in die Datenbank eingepflegt werden, dass die entsprechenden vorberechneten Gesamtwege jeweils zwischen Sonderzielen und Anschlussknoten bereits berücksichtigt sind. Die entsprechenden Beschränkungsparameter können jedoch auch mit den jeweils aktuell hinzutretenden Beschränkungsparametern gemeinsam bei der konkreten Routenplanung angegeben und dann bei der Auswertung der zur Verfügung stehenden Gesamtwege für jedes Paar eines Sonderziels und eines Anschlussknotens berücksichtigt werden.

Das Navigationssystem kann durch das erfindungsgemäße Verfahren bei Bekanntsein der Parameterwerte des aktuellen Fahrzeugs oder nach Eingabe entsprechender Parameterwerte selbständig den kürzesten Gesamtweg zwischen einem Anschlussknoten und einem Sonderziel angeben, der durch das aktuelle Fahrzeug befahrbar ist. Dies kann für verschiedene vorselektierte Sonderziele und Anschlussknoten geschehen, wobei die Zwischenergebnisse in nach dem Stand der Technik üblicher Weise in eine Gesamtroutenplanung eingepflegt werden können.

Eine vorteilhafte Ausgestaltung des erfindungsgemäßen Verfahrens sieht vor, dass bei jedem Paar aus einem Sonderziel und einem mit diesem verknüpften Anschlussknoten Gesamtwege, beginnend mit dem kürzesten Gesamtweg, in der Reihenfolge ansteigender Gesamtweglänge bezüglich der Beschränkungsparameter mit den Parameterwerten des vorgegebenen Fahrzeugs verglichen werden und dass, wenn ein Gesamtweg durch das vorgegebene Fahrzeug befahrbar ist, dieser Gesamtweg ausgewählt wird und das Auswahlverfahren zu diesem aus einem Anschlussknoten und einem Sonderziel bestehenden Paar abgebrochen wird. Dieses Verfahren beschreibt detailliert die Zuordnung eines befahrbaren, möglichst kurzen Gesamtweges zu einem Sonderziel für das aktuelle Fahrzeug in Echtzeit/Systemlaufzeit.

Eine weitere vorteilhafte Ausgestaltung der Erfindung kann vorsehen, dass als Beschränkungsparameter die zugelassene Fahrzeuglänge und/oder die Fahrzeugbreite und/oder die Fahrzeughöhe berücksichtigt werden. Es sind als zu berücksichtigende Beschränkungsparameter auch das zulässige oder tatsächliche Fahrzeuggewicht und/oder das tatsächliche Transportieren oder die Transportzulassung für Gefahrgüter und/oder die Fahrzeugbauart denkbar.

Vorteilhaft kann außerdem für das erfindungsgemäße Verfahren vorgesehen sein, dass für die Sonderzielsuche eine oder mehrere Kategorien von Sonderzielen von der Bedienperson selektierbar sind und durch die Anwenderschnittstelle angeboten werden. Als Sonderziele kommen in diesem Zusammenhang beispielsweise Werkstätten, Tankstellen, Rastplätze, Restaurants, Hotels, Kaufhäuser, Polizeidienststellen oder Ähnliches in Frage.

Ist ein Sonderziel mit mehreren Anschlussknoten verknüpft und sind die Gesamtwege, insbesondere mit entsprechenden Nutzungsbeschränkungen, bekannt, so kann bei der Einbeziehung ausgewählter Sonderziele in die abschließende Routenplanung auch in Betracht gezogen werden, dass ein Sonderziel nicht auf demselben Gesamtweg wieder verlassen wird, auf dem es angefahren wurde, sondern dass ein Sonderziel über einen ersten Anschlussknoten angefahren wird und dann zur Weiterverfolgung der Route von dem Sonderziel aus ein weiterer, vom ersten verschiedener Anschlussknoten angefahren wird, um in Bezug auf die Verfolgung der Gesamtroute den Weg zu verkürzen.

Eine weitere vorteilhafte Ausgestaltung der Erfindung kann zudem vorsehen, dass zu den aufgefundenen Sonderzielen die Anschlussknoten und die Gesamtweglängen zwischen je einem Sonderziel und dem mit diesem verknüpften Anschlussknoten angezeigt werden.

Zum Abschluss der Routenplanung kann, wie oben erläutert, vorgesehen sein, dass ein oder mehrere Sonderziele aus den aufgefundenen Sonderzielen ausgewählt und in eine Routenberechnung einbezogen werden.

Im Folgenden wird die Erfindung anhand eines Ausführungsbeispiels in verschiedenen Figuren gezeigt und nachfolgend erläutert. Dabei zeigt:
- Fig. 1: schematisch den Aufbau eines Navigationssystems,
- Fig. 2: schematisch eine geplante Route zwischen einem Startpunkt und einem Zielpunkt mit drei Anschlussknoten und in deren Nähe befindlichen Sonderzielen,
- Fig. 3: einen Anschlussknoten sowie ein Sonderziel mit verschiedenen Gesamtwegen, die diese miteinander verbinden, sowie
- Fig. 4: ein Ablaufdiagramm, das die Funktion des erfindungsgemäßen Navigationssystems und des Verfahrens zu seinem Betrieb illustriert.

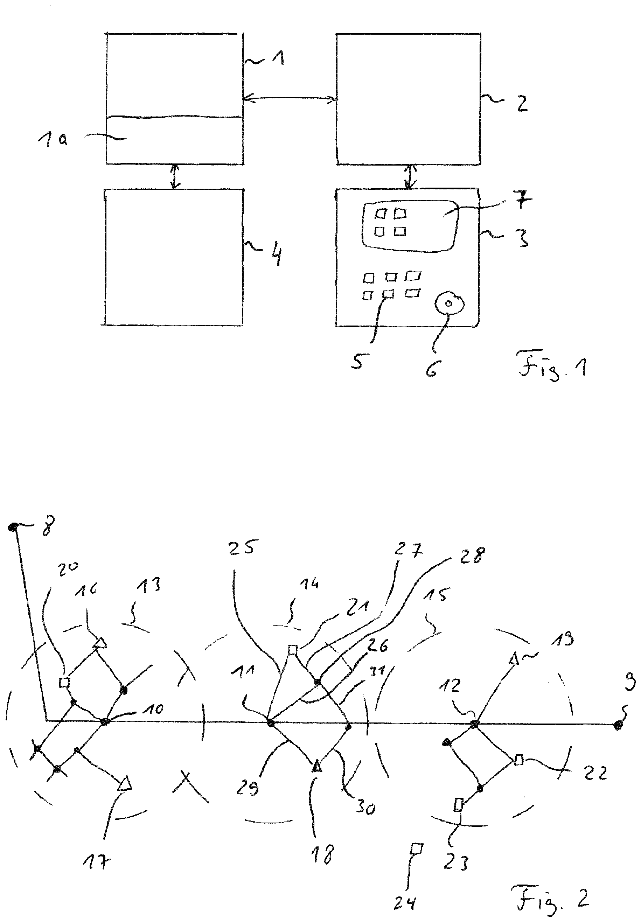

Figur 1 zeigt schematisch ein Navigationssystem mit einer Datenbank 1, einer Routenberechnungseinrichtung 2, einer Anwenderschnittstelle 3 sowie einer Ortungseinrichtung 4. Die Datenbank 1 enthält eine Speichereinrichtung, in der Wegknoten/ Verkehrsknoten sowie Wegstücke für ein geografisches Gebiet gespeichert sind. Zusätzlich sind zu den Wegstücken, die Wegknoten/Verkehrsknoten miteinander verbinden, deren Nutzungsbeschränkungen in Form von Beschränkungsparametern und Grenzwerten für die entsprechenden Parameter gespeichert. Die Datenbank enthält zudem Sonderziele verschiedener Kategorien sowie die Wegstücke, die diese Sonderziele mit anderen Verkehrsknoten in Form von Anschlussknoten verbinden, und deren Eigenschaften.

Innerhalb der Datenbank sind Anschlussknoten, beispielsweise in Form von Autobahnausfahrten, mit entsprechenden Sonderzielen verknüpft, sofern bestimmte Bedingungen vorliegen, wie beispielsweise ein geografischer Luftlinienabstand zwischen dem jeweiligen Sonderziel und dem Anschlussknoten, der fünf oder zehn Kilometer nicht überschreitet.

Zu den entsprechenden Paaren von Anschlussknoten und Sonderzielen sind jeweils ein oder mehrere Gesamtwege abgespeichert, die diese miteinander verbinden. In Sonderfällen ist nur ein einziger Gesamtweg abgespeichert, sofern dieser keinerlei Nutzungsbeschränkungen aufweist. In vielen Fällen sind zwei oder mehr Gesamtwege zu einem solchen Paar abgespeichert, wobei diese unterschiedliche Weglängen, gemessen an der jeweils zugrunde gelegten Metrik, und unterschiedliche Nutzungsbeschränkungen aufweisen. Die Metrik für die Bestimmung der Weglänge kann beispielsweise auf der Entfernung zwischen dem Sonderziel und dem Anschlussknoten in Straßenkilometern oder auf der für die Verbindung aufzuwendenden Fahrzeit oder dem Kraftstoffverbrauch basieren.

Den einzelnen der Wegstücke, die das jeweilige Sonderziel mit dem mit ihm verknüpften Anschlussknoten verbinden, sind unterschiedliche Nutzungsbeschränkungen zugeordnet, so dass die Nutzungsbeschränkung eines Gesamtweges sich durch die jeweils stärkste Restriktion eines zu durchlaufenden Wegstückes definiert. Da verschiedene gespeicherte Gesamtwege unterschiedliche Kombinationen von Wegstücken enthalten, ergeben sich auch als Gesamtnutzungsbeschränkung für die Gesamtwege unterschiedliche Parameterwerte der Beschränkungsparameter. Die gespeicherten Gesamtwege zu jeweils einem Sonderziel und einem Anschlussknoten sind entsprechend der Entfernung in zurückzulegenden Straßenkilometern in ansteigender Reihenfolge geordnet. Dabei ergibt sich beim Übergang zu jeweils längeren Gesamtwegen sukzessive der Wegfall oder die Verringerung von Nutzungsbeschränkungen. Es kann beispielsweise vorgesehen sein, dass jeweils so viele Gesamtwege angegeben sind, dass der längste dieser Gesamtwege frei von Nutzungsbeschränkungen ist. Spätestens an diesem Punkt ist die weitere Suche von Gesamtwegen nicht weiter hilfreich.

Die Ortungseinrichtung 4 des Navigationssystem kann beispielsweise auf einem üblichen GPS-System (Global Positioning System) basieren und erlauben, die aktuelle Position des Fahrzeugs festzustellen. Diese aktuelle Position kann beispielsweise als erster Anschlussknoten zur Verfügung gestellt werden.

Die Anwenderschnittstelle 3 des Navigationssystems enthält eine Eingabeeinrichtung 5 mit Tasten und/oder einem Joystick 6 sowie eine Anzeigeeinrichtung 7, beispielsweise in Form eines Touchscreens. Auf dem Touchscreen 7 können auch sogenannte Softkeys eingeblendet werden, die der Eingabe von Daten dienen.

Beispielsweise können auf dem Anzeigefeld 7 zu den jeweiligen Sonderzielen jeweils bezüglich eines Anschlussknotens eine Reihe von Gesamtwegen sowie deren Nutzungsbeschränkungen angezeigt werden. Der Nutzer kann dann durch Berühren des Bildschirms bei dem an der entsprechenden Stelle angezeigten Gesamtweg einen der Gesamtwege für sein Fahrzeug auswählen.

Die Datenbank 1 weist üblicherweise eine Speichereinrichtung auf, in der die Sonderziele sowie mit diesen verknüpften Anschlussknoten und gegebenenfalls auch die hierzu abgespeicherten Gesamtwege enthalten sind. Die Speichereinrichtung ist innerhalb der Datenbank 1 mit 1a bezeichnet.

Figur 2 zeigt eine Route zwischen einem Anfangspunkt 8 und einem Zielpunkt 9 sowie drei Anschlussknoten 10, 11, 12, die in diesem Fall Autobahnabfahrten darstellen. Um die jeweiligen Anschlussknoten 10, 11, 12 herum ist jeweils ein Kreis 13, 14, 15 gestrichelt eingezeichnet, der den Einzugsbereich der jeweiligen Anschlussknoten, d. h. den geografischen Bereich bezeichnet, innerhalb dessen mit dem jeweiligen Anschlussknoten Sonderziele verknüpft sein können. Es sind jeweils zwei Arten von Sonderzielen dargestellt, nämlich Tankstellen, symbolisiert durch Dreiecke 16, 17, 18, 19, sowie Restaurants, symbolisiert durch Quadrate 20, 21, 22, 23, 24. Es zeigt sich, dass die eingezeichneten Sonderziele in den zwei Kategorien Restaurants und Tankstellen jeweils den Anschlussknoten 10, 11 oder 12 zugeordnet sind, bis auf das mit 24 bezeichnete Restaurant, das außerhalb des Kreises 15 liegt und damit in einer zu großen geografischen Entfernung von dem Anschlussknoten 12, als dass es mit diesem verknüpft sein sollte.

Die übrigen Sonderziele sind jeweils mit den Anschlussknoten 10, 11 oder 12 verknüpft. Es sind in der Datenbank 1 somit Gesamtwege gespeichert, die die Sonderziele 16 bis 23 mit den Anschlussknoten 10, 11 oder 12 verbinden. Beispielsweise ist das Restaurant 21 mit dem Anschlussknoten 11 durch ein Wegstück 25 unmittelbar verbunden, das gleichzeitig einen die beiden verbindenden Gesamtweg darstellt. Dieser Gesamtweg 25 kann zwischen dem Anschlussknoten 11 und dem Sonderziel 21 beispielsweise die kürzeste Weglänge aufweisen. Das Wegstück 25 soll jedoch eine Nutzungsbeschränkung in Form einer Beschränkung des zulässigen Gesamtgewichts von Fahrzeugen für die Nutzung dieses Wegstücks aufweisen. Das zulässige Gesamtgewicht ist beispielsweise auf maximal 12 Tonnen beschränkt.

In der Datenbank 1 ist für diesen Fall zusätzlich zu dem Wegstück 25 als erster weiterer Gesamtweg die Verbindung zwischen dem Anschlussknoten 11 und dem Restaurant 21 über die Wegstücke 26 und 27 gespeichert, wobei die Wegstücke 26 und 27 am Verkehrsknoten 28 miteinander verbunden sind. Das Wegstück 26 soll beispielsweise als Nutzungsbeschränkung eine Höhenbeschränkung für Fahrzeuge mit der maximal zulässigen Gesamthöhe von 2,50 Metern aufweisen. Das Wegstück 27 weist keine Nutzungsbeschränkung auf. Der zweite Gesamtweg 26, 27 weist somit die Nutzungsbeschränkung des Wegstücks 26 und damit die Beschränkung auf die Fahrzeughöhe von 2,50 Metern auf. Es kann ein weiterer Gesamtweg mit den Wegstücken 29, 30, 31 und 27 abgespeichert sein, wobei keines der genannten Wegstücke Nutzungsbeschränkungen aufweisen soll. Dieser im Vergleich längste Gesamtweg ist damit für jedes Fahrzeug befahrbar.

Die Anwenderschnittstelle 3 kann, wenn beispielsweise Restaurants für die angegebene Route gesucht werden, Verbindungen zwischen dem Anschlussknoten 11 und dem Restaurant 21 in Form von drei Gesamtwegen anbieten, von denen der längste keine Nutzungsbeschränkungen aufweist.

Die Nutzungsbeschränkungen der kürzeren Wege 25 und 26, 27 können entweder vom Fahrer mit den Daten des vorliegenden Fahrzeugs abgeglichen werden, oder sie können auch, wenn dem Navigationssystem die Parameter des aktuellen Fahrzeugs bekannt sind, automatisch innerhalb des Navigationssystem 1, 2, 3, 4 derart abgeglichen werden, dass der kürzeste Gesamtweg selektiert wird, dessen Nutzungsbeschränkungen den Weg für das aktuelle Fahrzeug nicht unbefahrbar machen.

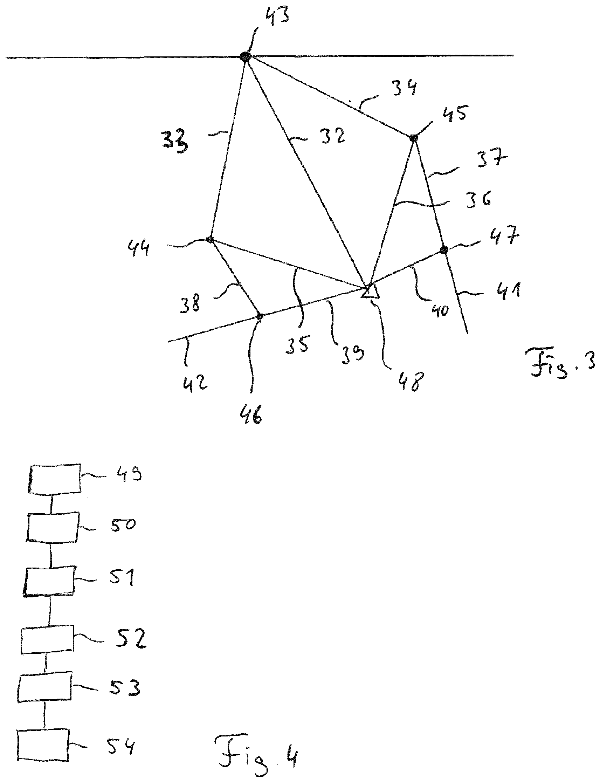

Anhand der Figur 3 soll die Anordnung der ausgewählten Gesamtwege anhand der Nutzungsbeschränkungen erläutert werden, wenn Nutzungsbeschränkungen bezüglich verschiedener Beschränkungsparameter berücksichtigt werden. In dem gegebenen Fall wird angenommen, dass von dem Anschlussknoten 43 aus das Sonderziel 48 erreicht werden soll. Das kürzeste Wegstück 32 zwischen dem Anschlussknoten 43 und dem Sonderziel 48 weist eine Nutzungsbeschränkung bezüglich der Fahrzeughöhe und des Fahrzeuggewichts auf. Die maximal zulässige Fahrzeughöhe seien 2,3 Meter, und das maximal zulässige Gesamtgewicht des Fahrzeugs sei 7,5 Tonnen. Dieser kürzeste Gesamtweg steht an erster Stelle in der Reihe von gespeicherten Gesamtwegen zwischen dem Anschlussknoten 43 und dem Sonderziel 48, da er den kürzesten Gesamtweg repräsentiert. Im Folgenden wird angenommen, dass die Gesamtwege in erster Linie nach den Beschränkungen der Fahrzeughöhe und danach bei gleicher Höhenbeschränkung nach den Beschränkungen des Fahrzeuggewichts geordnet werden. Dabei sollen in dem konkreten Fall folgende Nutzungsbeschränkungen gelten:

| | |
|---|---|
| Wegstück 33: | Höhenbeschränkung 2,3 Meter, |
| Wegstück 34: | Höhenbeschränkung 2,8 Meter, |
| Wegstück 35: | Gewichtsbeschränkung 7,5 Tonnen, |
| Wegstück 36: | Gewichtsbeschränkung 7,5 Tonnen, |
| Wegstück 37: | Gewichtsbeschränkung 18 Tonnen, |
| Wegstück 38: | Gewichtsbeschränkung 18 Tonnen, |
| Wegstücke 39, 40: | keine Nutzungsbeschränkungen. |

Bei den gegebenen Nutzungsbeschränkungen würde sich folgende Reihenfolge der gespeicherten Gesamtwege ergeben:
- Der kürzeste Gesamtweg mit allerdings starken Nutzungsbeschränkungen wäre der Weg 32 (2,3 Meter; 7,5 Tonnen).
- Der zweite Gesamtweg wäre der Weg mit den Wegstücken 33, 35 (2,3 Meter; 7,5 Tonnen; längere Gesamtweglänge).
- Der nächste Gesamtweg in der Ergebnisliste wäre der Weg mit den Wegstücken 33, 38, 39 (2,3 Meter; 18 Tonnen).
- Der nächste Gesamtweg wäre der Weg mit den Wegstücken 34, 36 (2,8 Meter; 7,5 Tonnen).
- Der nächste Gesamtweg wäre der Weg mit den Wegstücken 34, 37, 40 (2,8 Meter; 18 Tonnen).
Eine derartige Anordnung der Gesamtwege in der gespeicherten Auswahl von Gesamtwegen könnte insbesondere dann vorteilhaft sein, wenn das aktuelle Fahrzeug eine kritische Gesamthöhe und ein weniger kritisches, d. h. weniger hohes zulässiges Gesamtgewicht aufweist. Es sind jedoch auch andere Gewichtungen/Reihenfolgen bei den Anordnungen der gespeicherten Gesamtwege denkbar. Beispielsweise kann auch eine nach gegebenen Gesichtspunkten geordnete Liste von Gesamtwegen verschiedene Gesamtwege zu verschiedenen Sonderzielen derselben Kategorie, auch von verschiedenen Anschlussknoten aus, zusammenfassen.

Figur 4 zeigt einen typischen Verfahrensablauf beim Betrieb des Navigationssystems.

In einem ersten Verfahrensschritt 49 wird dem Navigationssystem ein Startpunkt und ein Zielpunkt mittels der Anwenderschnittstelle 3 eingegeben. Im zweiten Schritt 50 wird durch die Routenberechnungseinrichtung 2 eine Route zwischen Start-und Zielpunkt mit Anschlussknoten 10, 11, 12, 43 berechnet. Im dritten Schritt 51, der auch vor dem zweiten Schritt 50 der Routenberechnung liegen kann, werden über die Anwenderschnittstelle 3 gesuchte Sonderziele oder Kategorien von Sonderzielen eingegeben.

Da die Routenberechnungseinrichtung selbständig Anschlussknoten berechnet und zu diesen für verschiedene Kategorien von Sonderzielen bereits Listen von Gesamtwegen gespeichert sind, die die entsprechenden Sonderzielen mit den Anschlussknoten verbinden, können in einem vierten Schritt 52 unmittelbar ein oder mehrere Gesamtwege angegeben werden, die von der Route an Anschlussknoten abzweigen und zu den gewünschten Sonderzielen führen. Die zur Auswahl stehenden Gesamtwege werden mittels der Anwenderschnittstelle beispielsweise auf einem Touchscreen angezeigt.

Zusammen mit den Gesamtwegen werden auch die Nutzungsbeschränkungen in Form der Beschränkungsparameter und insbesondere zusätzlich der Grenzwerte der einzelnen Beschränkungsparameter zu den einzelnen Gesamtwegen angezeigt.

Der Fahrer kann nun von den angebotenen Gesamtwegen einen auswählen, dessen Nutzungsbeschränkungen zu seinem Fahrzeug passen, und in einem fünften Schritt berechnet die Routenberechnungseinrichtung 2 eine detailliertere Ausarbeitung der Route, bei der das entsprechende Sonderziel mit einbezogen ist. Dies kann auch gleichzeitig für verschiedene in einem ersten Schritt ausgewählte Sonderziele und die entsprechend zusätzlich ausgewählten Gesamtwege geschehen.

In einem letzten Schritt 54 beginnt dann die Routenführung anhand der berechneten Route und mittels der Ortungseinrichtung 4.

Es kann vorgesehen sein, dass jederzeit während des Befahrens der Route der zweite Schritt der Auswahl von Sonderzielen oder der Schritt, bei dem bestimmte Gesamtwege zu einem vorselektierten Sonderziel ausgewählt werden, nachgeholt oder wiederholt werden kann, wenn beispielsweise die Abfahrt von einem Anschlussknoten aus verpasst wurde und ein ähnliches Sonderziel beim nächsten Anschlussknoten angefahren werden soll.

Die Erfindung erlaubt eine komfortable und schnelle Routenplanung auch für Fahrzeuge, die besonderen Nutzungsbeschränkungen unterliegen, für den Fall, dass das Navigationssystem eine ausreichende Speicherkapazität und entsprechende Vorbereitung auf die Anforderungen aufweist, insbesondere auch bei einer relativ schwachen Rechenleistung des Navigationssystems.

## Patentansprüche

1. Navigationssystem zur Ermittlung von qualifizierten Sonderzielen mit einer Datenbank (1), in der Verkehrsknoten (8, 9, 10, 11, 12, 43, 44, 45, 46, 47, 48) sowie diese verbindende Wegstücke (25, 26, 27, 29, 30, 31, 32, 33, 34, 35, 36, 37, 38, 39, 40, 41, 42) und deren Eigenschaften gespeichert sind, mit einer Routenberechnungseinrichtung (2), wobei in der Datenbank (1) abgespeicherte Sonderziele (16, 17, 18, 19, 20, 21, 22, 23, 48) jeweils mit einem oder mehreren Verkehrsknoten in Form von Anschlussknoten (10, 11, 12, 43), insbesondere Autobahnabfahrten, verknüpft sind und wobei jedem Sonderziel bezüglich jedes mit diesem verknüpften Anschlussknotens wenigstens eine Gesamtweglänge eines ersten, das Sonderziel und den Anschlussknoten miteinander verbindenden Gesamtweges zugeordnet ist, **dadurch gekennzeichnet, dass** wenigstens in dem Fall, dass der erste Gesamtweg eine Nutzungsbeschränkung aufweist, dem Sonderziel und dem Anschlussknoten noch wenigstens die Gesamtweglänge eines zweiten Gesamtweges zugeordnet ist, der wenigstens bezüglich eines Beschränkungsparameters geringere Nutzungsbeschränkungen aufweist.

2. Navigationssystem nach Anspruch 1, **dadurch gekennzeichnet, dass** die einem Sonderziel (16, 17, 18, 19, 20, 21, 22, 23, 48) zugeordneten Anschlussknoten (10, 11, 12, 43) einem ersten Auswahlkriterium genügen.

3. Navigationssystem nach Anspruch 1 oder 2, **dadurch gekennzeichnet, dass** die Zahl der einem Sonderziel (16, 17, 18, 19, 20, 21, 22, 23, 48) und einem Anschlussknoten (10, 11, 12, 43) zugeordneten Gesamtwege durch eine Obergrenze der zugelassenen Gesamtweglänge und/oder durch eine Obergrenze der Zahl der Gesamtwege begrenzt ist.

4. Navigationssystem nach Anspruch 1, 2 oder 3, **dadurch gekennzeichnet, dass** eine Nutzungsbeschränkung zulässige Grenzwerte bezüglich eines oder mehrerer Beschränkungsparameter enthält, wobei der Grenzwert bezüglich eines Beschränkungsparameters durch den jeweils restriktivsten Grenzwert der Wegstücke des jeweiligen Gesamtweges gegeben ist.

5. Navigationsystem nach einem der vorhergenenden Ansprüche, **dadurch gekennzeichnet, dass** eine Mehrzahl von mit jeweils wenigstens einem Sonderziel (16, 17, 18, 19, 20, 21, 22, 23, 48) verknüpften Anschlussknoten (10, 11, 12, 43) vorgesehen ist, wobei mindestens einem Sonderziel und einem mit diesem verknüpften Anschlussknoten, insbesondere einer Mehrzahl von aus je einem Sonderziel und einem mit diesem verknüpften Anschlussknoten bestehenden Ortspaaren je eine Mehrzahl von diese verbindenden Gesamtwegen mit unterschiedlichen Nutzungsbeschränkungen und Gesamtweglängen zugeordnet ist und dass zu jedem Ortspaar die Gesamtwege entsprechend ihrer Gesamtweglänge geordnet sind.

6. Navigationssystem nach einem der vorhergehenden Ansprüche, **dadurch gekennzeichnet, dass** die jeweiligen Gesamtweglängen in Straßenkilometern oder in der zum Zurücklegen des jeweiligen Gesamtweges erforderlichen Fahrzeit oder dem hierzu erforderlichen Kraftstoffaufwand gemäß einer standardisierten Berechnung oder durch eine Verknüpfung der genannten Größen gemessen werden.

7. Navigationssystem nach einem der vorhergehenden Ansprüche, **dadurch gekennzeichnet, dass** ein Beschränkungsparameter die Fahrzeughöhe und/oder die Fahrzeugbreite und/oder das Fahrzeuggesamtgewicht und/oder das zulässige Gesamtgewicht des Fahrzeugs und/oder die Fahrzeuglänge und/oder die Fahrzeugbauart und/oder die zulässige Achsbelastung pro Achse und/oder die Mindestgeschwindigkeit und/oder das Nutzungsverbot für gefährliche geladene Güter ist.

8. Verfahren zum Betrieb eines Navigationssystems nach einem der Ansprüche 1 bis 7 im Hinblick auf ein aktuelles, vorgegebenes Fahrzeug, **dadurch gekennzeichnet, dass** ein oder mehrere Anschlussknoten (10, 11, 12, 43), insbesondere als Stationen einer festgelegten Route (8, 9), ausgewählt werden, dass zu jedem Anschlussknoten (10, 11, 12, 43) die Sonderziele ausgewählt werden, die mit diesem mittels einer Zuordnung in der Datenbank (1) verknüpft sind, dass dem Anschlussknoten zu jedem mit diesem verknüpften Sonderziel wenigstens ein Gesamtweg zugeordnet wird, sofern nur ein Gesamtweg zwischen dem Anschlussknoten und dem Sonderziel in der Datenbank hinterlegt ist, und dass, falls die Datenbank (1) mehrere Gesamtwege als Verbindungen zwischen dem Anschlussknoten und dem Sonderziel mit unterschiedlichen Nutzungsbeschränkungen aufweist, unter Berücksichtigung der Beschränkungsparameterwerte des aktuellen Fahrzeugs derjenige Gesamtweg ermittelt und dem Anschlussknoten zugeordnet wird, der eine Durchfahrt des Fahrzeugs unter Berücksichtigung der vorliegenden Nutzungsbeschränkungen erlaubt und dabei die kleinste Gesamtweglänge aufweist.

9. Verfahren nach Anspruch 8, **dadurch gekennzeichnet, dass** bei jedem Paar aus einem Sonderziel und einem mit diesem verknüpften Anschlussknoten Gesamtwege, beginnend mit dem kürzesten Gesamtweg, in der Reihenfolge ansteigender Gesamtweglänge bezüglich der Beschränkungsparameter mit den Beschränkungsparameterwerten des aktuellen Fahrzeugs verglichen werden und dass, wenn ein Gesamtweg durch das vorgegebene Fahrzeug befahrbar ist, dieser Gesamtweg ausgewählt wird und das Auswahlverfahren zu diesem aus einem Anschlussknoten und einem Sonderziel bestehenden Paar abgebrochen wird.

10. Verfahren nach Anspruch 8 oder 9, **dadurch gekennzeichnet, dass** als Beschränkungsparameter die zugelassene Fahrzeuglänge und/oder Fahrzeugbreite und/oder Fahrzeughöhe berücksichtigt wird.

11. Verfahren nach Anspruch 8, 9 oder 10, **dadurch gekennzeichnet, dass** als Beschränkungsparameter das zulässige oder tatsächliche Fahrzeuggewicht und/oder die aktuelle Ladung und/oder die Transportzulassung für Gefahrengüter und/oder eine Fahrzeugbauart berücksichtigt wird.

12. Verfahren nach einem der vorhergehenden Ansprüche 8 bis 11, **dadurch gekennzeichnet, dass** für die Sonderzielauswahl eine oder mehrere Kategorien von Sonderzielen (16, 17, 18, 19, 20, 21, 22, 23, 48) selektierbar sind.

13. Verfahren nach einem der vorhergehenden Ansprüche 8 bis 12, **dadurch gekennzeichnet, dass** zu den aufgefundenen Sonderzielen die Anschlussknoten und die Gesamtweglängen zwischen je einem Sonderziel und dem mit diesem verknüpften Anschlussknoten angezeigt werden.

14. Verfahren nach Anspruch 13, **dadurch gekennzeichnet, dass** ein oder mehrere Sonderziele aus den aufgefundenen Sonderzielen ausgewählt und in eine Routenberechnung einbezogen werden.

## Claims

1. Navigation system for ascertaining qualified special destinations having a database (1), in which traffic nodes (8, 9, 10, 11, 12, 43, 44, 45, 46, 47, 48) and path sections (25, 26, 27, 29, 30, 31, 32, 33, 34, 35, 36, 37, 38, 39, 40, 41, 42) connecting them and the properties thereof are stored, having a route computation device (2), wherein special destinations (16, 17, 18, 19, 20, 21, 22, 23, 48) stored in the database (1) are linked in each case to one or more traffic nodes in the form of connecting nodes (10, 11, 12, 43), in particular highway exits, and wherein each special destination is assigned with respect to each connecting node that is linked thereto at least one total path length of a first total path connecting the special destination and the connecting node, **characterized in that** at least in the case where the first total path has a use limitation, the special destination and the connecting node are also assigned at least the total path length of a second total path which has lower use limitations at least with respect to one limitation parameter.

2. Navigation system according to Claim 1, **characterized in that** the connecting nodes (10, 11, 12, 43) that are assigned to a special destination (16, 17, 18, 19, 20, 21, 22, 23, 48) satisfy a first selection criterion.

3. Navigation system according to Claim 1 or 2, **characterized in that** the number of the total paths assigned to a special destination (16, 17, 18, 19, 20, 21, 22, 23, 48) and to a connecting node (10, 11, 12, 43) is limited by an upper limit of the admissible total path length and/or by an upper limit of the number of total paths.

4. Navigation system according to Claim 1, 2 or 3, **characterized in that** a use limitation includes admissible limit values with respect to one or more limitation parameters, wherein the limit value with respect to a limitation parameter is given by the respectively most restrictive limit value of the path sections of the respective total path.

5. Navigation system according to one of the preceding claims, **characterized in that** a plurality of connecting nodes (10, 11, 12, 43) that are linked to in each case at least one special destination (16, 17, 18, 19, 20, 21, 22, 23, 48) is provided, wherein at least one special destination and one connecting node that is linked thereto, in particular a plurality of location pairs consisting of in each case one special destination and one connecting node linked thereto, are assigned in each case a plurality of total paths connecting them having different use limitations and total path lengths, and **in that** for each location pair, the total paths are arranged according to their total path length.

6. Navigation system according to one of the preceding claims, **characterized in that** the respective total path lengths are measured in kilometers of road, or in the driving time required to travel the respective total path, or in the fuel expenditure necessary therefor according to a standardized computation, or by linking the stated variables.

7. Navigation system according to one of the preceding claims, **characterized in that** a limitation parameter is the vehicle height and/or the vehicle width and/or the total vehicle weight and/or the admissible total weight of the vehicle and/or the vehicle length and/or the vehicle type and/or the admissible axle load per axle and/or the minimum speed and/or the use prohibition for loaded hazardous goods.

8. Method for operating a navigation system according to one of Claims 1 to 7 with respect to a current, given vehicle, **characterized in that** one or more connecting nodes (10, 11, 12, 43) are selected, in particular as stations on a fixed route (8, 9), **in that** the special destinations are selected for each connecting node (10, 11, 12, 43), which special destinations are linked thereto by way of assignment in the database (1), **in that** the connecting node is assigned at least one total path for each special destination connected thereto, as long as only one total path between the connecting node and the special destination is stored in the database, and, if the database (1) has a plurality of total paths as connections between the connecting node and the special destination having different use limitations, **in that** the total path is ascertained and assigned to the connecting node which permits passage of the vehicle while taking account of the existing use limitations and which also has the smallest total path length, taking into consideration the limitation parameter values of the current vehicle.

9. Method according to Claim 8, **characterized in that**, for each pair of special destination and connecting node that is linked thereto, total paths, starting with the shortest total path, in the order of increasing total path length, are compared to the limitation parameter values of the current vehicle with respect to the limitation parameters, and, if a total path can be traveled by the given vehicle, **in that** this total path is selected and the selection method for this pair consisting of a connecting node and a special destination is interrupted.

10. Method according to Claim 8 or 9, **characterized in that** the admissible vehicle length and/or vehicle width and/or vehicle height is taken into account as the limitation parameter.

11. Method according to Claim 8, 9 or 10, **characterized in that** the admissible or actual vehicle weight and/or the current load and/or the transport admission for hazardous goods and/or a vehicle type is taken into account as the limitation parameter.

12. Method according to one of the preceding Claims 8 to 11, **characterized in that** one or more categories of special destinations (16, 17, 18, 19, 20, 21, 22, 23, 48) are selectable for the selection of special destinations.

13. Method according to one of the preceding Claims 8 to 12, **characterized in that** the connecting nodes and the total path lengths between in each case one special destination and the connecting node that is linked thereto are displayed for the found special destinations.

14. Method according to Claim 13, **characterized in that** one or more special destinations are selected from the found special destinations and incorporated in a route computation.

## Revendications

1. Système de navigation destiné à la détermination de destinations particulières qualifiées, avec une banque de données (1), dans laquelle sont enregistrés des noeuds de communication (8, 9, 10, 11, 12, 43, 44, 45, 46, 47, 48), ainsi que des tronçons de parcours (25, 26, 27, 29, 30, 31, 32, 33, 34, 35, 36, 37, 38, 39, 40, 41, 42) qui relient lesdits noeuds de communication (8, 9, 10, 11, 12, 43, 44, 45, 46, 47, 48) et leurs propriétés, ainsi qu'avec un mécanisme de calcul des itinéraires (2) ;
selon lequel des destinations particulières (16, 17, 18, 19, 20, 21, 22, 23, 48) mémorisées dans la banque de données (1) sont reliées respectivement à un ou plusieurs noeuds de communication sous la forme de noeuds de raccordement (10, 11, 12, 43), en particulier à des sorties d'autoroute ; et
selon lequel tout au moins une longueur de trajet global d'un premier trajet global, lequel relie l'un à l'autre la destination particulière et le noeud de raccordement, est associée à chaque destination particulière au regard de chaque noeud de raccordement qui est relié à ladite destination particulière ; **caractérisé en ce que** tout au moins dans le cas où le premier trajet global présente une restriction de l'utilisation, tout au moins la longueur de trajet global d'un deuxième trajet global reste encore associée à la destination particulière et avec le noeud de raccordement, lequel deuxième trajet global présente tout au moins des restrictions d'utilisation plus réduites au regard d'un paramètre de limitation.

2. Système de navigation selon la revendication 1, **caractérisé en ce que** les noeuds de raccordement (10, 11, 12, 43) qui sont associés à une destination particulière (16, 17, 18, 19, 20, 21, 22, 23, 48) répondent à un premier critère de sélection.

3. Système de navigation selon la revendication 1 ou 2, **caractérisé en ce que** le nombre de trajets globaux qui sont associés à une destination particulière (16, 17, 18, 19, 20, 21, 22, 23, 48) et à un noeud de raccordement (10, 11, 12, 43) est limité par une valeur plafond de la longueur de trajet global autorisée et/ou par une valeur plafond du nombre de trajets globaux.

4. Système de navigation selon la revendication 1, 2 ou 3, **caractérisé en ce qu'**une restriction de l'utilisation contient des valeurs de seuil admissibles au regard d'un ou de plusieurs paramètres de limitation, selon lequel la valeur de seuil au regard d'un paramètre de limitation est donnée par la valeur de seuil qui est respectivement la plus restrictive parmi les tronçons de parcours du trajet global respectif.

5. Système de navigation selon l'une des revendications précédentes, **caractérisé en ce qu'**une majorité de noeuds de raccordement (10, 11, 12, 43) est prévue, lesquels sont reliés avec respectivement tout au moins une destination particulière (16, 17, 18, 19, 20, 21, 22, 23, 48) ;
selon lequel au moins chacune des majorités de trajets globaux, lesquels relient des appariements de lieux et lesquels présentent des restrictions d'utilisation et des longueurs de trajet global différentes, est associée à une destination particulière et à un noeud de raccordement, lequel est relié à ladite destination particulière, en particulier à une majorité d'appariements de lieux qui existent à partir de chacune de ces destinations particulières et à partir de chacun de ces noeuds de raccordement, lesquels sont reliés avec lesdites destinations particulières ; et
**caractérisé en ce que** pour chaque appariement de lieux, les trajets globaux sont classés en fonction de leur longueur de trajet global.

6. Système de navigation selon l'une des revendications précédentes, **caractérisé en ce que** les longueurs de trajet global respectives sont mesurées en kilomètres de routes ou dans la durée de conduite nécessaire pour parcourir le trajet global respectif ou dans la consommation de carburant requise à cet effet, conformément à un calcul standardisé ou par une mise en corrélation des grandeurs mentionnées.

7. Système de navigation selon l'une des revendications précédentes, **caractérisé en ce qu'**un paramètre de limitation correspond à la hauteur du véhicule et/ou à la largeur du véhicule et/ou au poids total du véhicule et/ou au poids total admissible du véhicule et/ou à la longueur du véhicule et/ou au modèle du véhicule et/ou à la charge admissible par essieu et/ou à la vitesse minimale et/ou à l'interdiction d'utiliser le véhicule pour transporter des marchandises dangereuses.

8. Procédé destiné à faire fonctionner un système de navigation selon l'une des revendications 1 à 7 au regard d'un véhicule prédéfini actuel, **caractérisé en ce qu'**un ou plusieurs noeuds de raccordement (10, 11, 12, 43) sont sélectionnés, en particulier sous la forme de stations d'un itinéraire (8, 9) donné ; **caractérisé en ce que** pour chaque noeud de raccordement (10, 11, 12, 43) sont sélectionnées les destinations particulières qui sont reliées avec ledit noeud de raccordement (10, 11, 12, 43), au moyen d'une association dans la banque de données (1) ; **caractérisé en ce que** tout au moins un trajet global est associé au noeud de raccordement (10, 11, 12, 43) pour chaque destination particulière qui est reliée avec ledit noeud de raccordement (10, 11, 12, 43), dans la mesure où seul un trajet global qui se trouve entre le noeud de raccordement (10, 11, 12, 43) et la destination particulière est archivé dans la banque de données (1) ; et
**caractérisé en ce que**, au cas où la banque de données (1) présente plusieurs trajets globaux définis sous la forme de liaisons entre le noeud de raccordement et la destination particulière avec des restrictions d'utilisation différentes, le trajet global qui sera déterminé et qui sera associé au noeud de raccordement, sera celui qui autorise une traversée du véhicule en tenant compte des restrictions d'utilisation existantes et qui présente à cet effet la plus petite longueur de trajet global, compte tenu des valeurs du paramètre de limitation du véhicule concerné.

9. Procédé selon la revendication 8, **caractérisé en ce que** pour chaque appariement réalisé à partir d'une destination particulière et d'un noeud de raccordement, lequel est relié à ladite destination particulière, des trajets globaux sont comparés avec les valeurs du paramètre de limitation du véhicule concerné, en commençant par le trajet global le plus court, dans l'ordre croissant des longueurs de trajet global, au regard des paramètres de limitation ; et
**caractérisé en ce que**, quand un trajet global peut être parcouru par le véhicule prédéfini, ce trajet global est sélectionné et le procédé de sélection est abandonné pour cet appariement existant réalisé à partir d'un noeud de raccordement et d'une destination particulière.

10. Procédé selon la revendication 8 ou 9, **caractérisé en ce que** la longueur du véhicule autorisée et/ou la largeur du véhicule autorisée et/ou la hauteur du véhicule autorisée est ou sont prises en compte sous la forme des paramètres de limitation.

11. Procédé selon la revendication 8, 9 ou 10, **caractérisé en ce que** le poids effectif ou admissible du véhicule et/ou le chargement actuel et/ou l'autorisation de transporter des marchandises dangereuses et/ou un modèle du véhicule est ou sont pris en compte sous la forme des paramètres de limitation.

12. Procédé selon l'une des revendications précédentes 8 à 11, **caractérisé en ce qu'**une ou plusieurs catégories de destinations particulières (16, 17, 18, 19, 20, 21, 22, 23, 48) peuvent être sélectionnées pour la sélection de la destination particulière.

13. Procédé selon l'une des revendications précédentes 8 à 12, **caractérisé en ce que** pour les destinations particulières trouvées, les noeuds de raccordement et les longueurs de trajet global sont affichés, ce à chaque fois entre une destination particulière et le noeud de raccordement qui est relié à ladite destination particulière.

14. Procédé selon la revendication 13, **caractérisé en ce qu'**une ou plusieurs destinations particulières issues des destinations particulières trouvées sont sélectionnées et intégrées dans un calcul de l'itinéraire.
